# EUROPÄISCHE PATENTSCHRIFT

(11) **EP 1 945 539 B1**
(45) Veröffentlichungstag und Bekanntmachung des Hinweises auf die Patenterteilung: **11.04.2012**
(21) Anmeldenummer: 06806128.2
(22) Anmeldetag: 10.10.2006
(51) Int. Cl.: B65G 1/04

(54) **REGALLAGER MIT UMSETZBAREN SCHIEBERGEHÄUSEN**
RACK STORE WITH TRANSFERRABLE SLIDE HOUSINGS
SUPPORT D'ETAGERE DOTE DE BOITIERS COULISSANTS AMOVIBLES

(30) Priorität: 27.10.2005 DE 102005051759
(43) Veröffentlichungstag der Anmeldung: 23.07.2008
(73) Patentinhaber: Pharmatechnik GmbH & Co. KG, 82319 Starnberg (DE)
(72) Erfinder: LANG, Hartmut, 73249 Wernau (DE)
(74) Vertreter: Rüger, Barthelt & Abel
(86) Internationale Anmeldenummer: PCT/EP2006/009751
(87) Internationale Veröffentlichungsnummer: WO 2007/048495

(56) Entgegenhaltungen:
- WO-A-03/018443
- US-A- 4 378 872

## Beschreibung

In der nicht vorveröffentlichten DE 10 200 024 478 ist ein Regallager, insbesondere ein Apothekenregallager mit herausnehmbaren Trennern bei den Regalböden, beschrieben. Das Regal weist übereinander mehrere Regalböden auf, die in einem Gestell gehaltert sind. Jeder Regalboden ist mit in Querrichtung verlaufenden Führungsnuten versehen. Jede Führungsnut setzt sich im Querschnitt gesehen aus einer Nutenkammer und einem Nutenschlitz zusammen, wobei die Weite der Kammer größer ist als die Weite des Schlitzes.

Die Anzahl der Führungsnuten in jedem Regalboden ist gleich und wesentlich größer als die Anzahl der möglichen zu bildenden Speichergassen, in denen einzulagernde Produkte hintereinander liegen.

Die Rasterung bei den Führungsnuten ist so gewählt, dass sie der kleinst möglichen Änderung der Speichergassenbreite entspricht, die aufgrund der einzulagernden Produkte eingehalten werden muss.

Die in den Führungsnuten laufenden Schieber dienen gleichzeitig als Trenneinrichtung zwischen auf dem Regalboden gebildeten virtuellen Speichergassen. Dadurch soll verhindert werden, dass beim Herausziehen der Produkte aus der Speichergasse und Überführen auf das vor der Speichergasse wartende Regalbediengerät die Produkte in der Nachbargasse durcheinander kommen, weil Produkte in der Kette seitlich ausbrechen.

Bei dieser Anordnung werden die Schieber gleichzeitig als mechanische Trenner verwendet, um die Speichergassen voneinander zu separieren.

Die Praxis hat jedoch gezeigt, dass unter bestimmten Umständen, sich Produkte in einer Speichergasse beim Transport so unglücklich verklemmen können, dass sie den Nachbarschieber mitnehmen.

Ein weitere Art vom Regallager ist aus der DE 101 40 958 bekannt, das fest installierte Schiebergehäuse verwendet, die auf den Fachböden befestigt sind. Bei diesem Regallager ist die Breite der Gassen nicht an die Änderung der Verteilung der Packungsgrößen anpassbar. Die Flexibilität ist damit deutlich eingeschränkt. Allerdings verhindern die fest montierten Schiebergehäuse eine Beeinträchtigung der Produkte in den Nachbargassen, wenn in einer Gasse die Produkte bewegt werden und einzelne Produkte zur Seite ausbrechen. Sie werden zwangsläufig von den festen Schiebergehäusen an beiden Seiten geführt.

Das Regallager gemäß der DE 101 40 958 weist übereinander mehrere ebene Regalböden auf. Auf jedem Regalboden sind mehrere Schiebergehäuse fest angebracht. Dadurch entstehen zwischen den Schiebegehäusen Speichergassen.

Jedes Schiebergehäuse enthält eine Führungsnut, in der eine Kuppelstange längsverschieblich geführt ist. Die Kuppelstange ist an einem Ende mit einem Mitnehmer versehen und am anderen Ende mit einem Schieber verbunden. Die Kuppelstange ist so in der Führungsnut des Schiebergehäuses längsverschieblich geführt. Mit Hilfe des quer zu dem Schiebergehäuse ausgerichteten Mitnehmers, der von dem Schiebergehäuse auskragt, kann ein Gegenstand aus der Speichergasse herausgeschoben werden.

Vor den Fachböden ist ein Regalbediengerät angeordnet dass dazu eingerichtet ist, vor jedes der Regalfächer bewegt zu werden.

Auf dem Regalbediengerät sind Antriebsmittel vorhanden die dazu eingerichtet sind mit dem Schieber wahlweise lösbar gekuppelt zu werden, um den Schieber, zumindest im Sinne eines Herausbeförderns von Gegenständen aus dem Regalfach in Bewegung zu setzen.

Aufgrund der starren Befestigung der Führungsgehäuse ist eine Anpassung der Speichergassenbreite und damit einer Anpassung des Regalbediengrätes an einem anderen Packungsgrößenmix unmöglich.

Ausgehend hiervon, ist es Aufgabe der Erfindung, eine Regallageranordnung zu schaffen, bei der die Speichergassen mechanisch voneinander getrennt sind und die Gassenbreite im Rahmen eines vorgegebenen Rasters beliebig verstellbar ist, ohne dass die Gefahr besteht, dass Bewegungen in einer Gasse eingelagerte Produkte in der Nachbargasse bewegen.

Diese Aufgabe wird erfindungsgemäß mit dem Regallager mit den Merkmalen des Anspruches 1 gelöst.

Bei dem neuen Regallager ist wenigstens ein Fachboden vorgesehen, der eine Auflagefläche für einzulagernde Gegenstände aufweist. In dem Fachboden ist wenigstens eine Aufnahmenut vorhanden. Bei der praktischen Ausführungsform sind mehrere Aufnahmenuten vorgesehen, die voneinander einen Abstand haben, der von der Art des Schiebergehäuses und der kleinsten Differenz zwischen erforderlichen Speichergassenbreiten abhängig ist.

Die Aufnahmenut dient der Halterung eines Schiebergehäuses, in der ein Schieber längsverschieblich geführt ist. Das Schiebergehäuse enthält für den Schieber eine Führungsnut. Auf diese Weise wird mit Hilfe des Schiebergehäuses eine Speichergasse mechanisch gegenüber der benachbarten Speichergasse abgetrennt.

Das Schiebergehäuse ragt mit einem Fortsatz in die Aufnahmenut hinein. Hierdurch wird das Schiebergehäuse in Richtung quer zur Speichergasse in der Aufnahemnut fixiert.

Um bei einem Verklemmen von Produkten zwischen den Schiebergehäusen eine Mitnahme der Schiebergehäuse zu blockieren, ist das jeweilige Schiebergehäuse mit einer Sicherungs- oder Arretierungseinrichtung versehen. Die Sicherungseinrichtung ist zwischen dem Schiebergehäuse und dem Fachboden wirksam und bei Bedarf lösbar, um das Schiebergehäuse aus der betreffenden Aufnahmenut des Fachbodens entnehmen zu können.

Außerdem gehört zu dem Regallager ein Regalbediengerät, dass beliebig vor dem oder den Regalfachböden positionierbar ist. Das Regalbediengerät weist Antriebsmittel auf, um die Schieber zu bewegen und hierdurch Produkte aus den Speichergassen auf das Regalbediengerät befördern zu können. Ferner gehören zu dem Regalbediengerät Antriebsmittel, die dazu eingerichtet sind, das Schiebegerhäuse samt Schieber auf das Regalbediengerät zu transportieren.

Der Fachboden kann als Strangpressprofil ausgeführt sein, vorzugsweise aus Kunststoff. Hierbei ist es sehr einfach möglich die T-Nuten auszubilden.

Der Abstand der Aufnahmenuten voneinander ist gleichmäßig und entspricht bei der Verwendung von Schiebergehäusen, bei denen der Fortsatz symmetrisch zwischen den seitlichen Flanken liegt, dem kleinsten Sprung hinsichtlich der Breite der Speichergasse. Wenn hingegen Schiebergehäuse verwendet werden, bei denen der Fortsatz je nach Art entweder der einen oder anderen seitlichen Flanke benachbart ist, kann der Rasterabstand größer gewählt werden, da allein durch Wechsel der Art des Schiebergehäuses die Gassenbreite verändert werden kann.

Die Aufnahmenut ist vorzugsweise eine hinterschnittene Aufnahmenut und setzt sich aus einer Nutenkammer und einem Nutenschlitz zusammen. Mit Hilfe der Hinterschneidung und einem entsprechend angepassten Fortsatz, lässt es sich verhindern, dass versehentlich das Schiebergehäuse aus der Nut ausgehoben werden kann.

Die Nutenkammer kann einen Rechteck- oder einen Kreisquerschnitt aufweisen, je nach dem wie der Fortsatz gestaltet ist.

Die Führungsnut im Schiebergehäuse kann hingegen im Wesentlichen hinterschneidungsfrei sein.

Damit der Schieber nicht durch irgendwelche Erschütterungen oder andere unglückliche Umstände bewegt wird, insbesondere beim Umstecken eines Schiebergehäuses ist der Schieber mit einer Rasteinrichtung versehen, die mit einer Rasteinrichtung an dem Schiebergehäuse zusammenwirkt.

Die Rasteinrichtung am Schiebergehäuse kann eine Blattfeder umfassen, an deren Unterseite ein Rastglied ausgebildet ist.

Um das Schiebergehäuse mit Hilfe des Regalbediengeräts manipulieren zu können, enthält es in der Nähe seiner Vorderkante eine seitliche quer zur Längserstreckung des Schiebergehäuses gelegene Öffnung. Hiermit kann formschlüssig ein Mitnehmer des Regalbediengeräts gekuppelt werden, um das Schiebergehäuse aus der Aufnahmenut zu entnehmen.

Ein sehr zuverlässiger Eingriff mit dem Schiebergehäuse wird erreicht, wenn zusätzlich auch der Schieber mit einer Öffnung versehen ist, die mit der Öffnung in dem Schiebergehäuse bei eingeschobenem Schieber fluchtet. Ein entsprechender Mitnehmer verhindert auf diese Weise bei der Manipulation des Schiebergehäuses eine Bewegung des Schiebers innerhalb des Schiebergehäuses, was später beim Anfahren der Speichergasse und den Versuch den Schieber anzukuppeln zu Problemen führen könnte.

Eine besonders gute Verankerung des Schiebergehäuses lässt sich erreichen, wenn der Fortsatz an der Unterseite des Schiebergehäuses als Leiste sich über nahezu die gesamte Länge des Schiebergehäuses erstreckt.

Dieser Fortsatz bzw. Leiste kann an demjenigen Ende, das beim Einsetzen des Schiebergehäuses in dem Fachboden vorauseilt mit seitlichen Fortsätzen versehen sein, die mit den Hinterschneidungen in der Aufnahmenut zusammenwirken. Dadurch wird zwangsläufig sichergestellt, dass das vorauseilende Ende in der Aufnahmenut bleibt und nicht herausspringen kann.

Der Schieber ist mit einem Mitnehmer ausgestattet, um den Schieber mit einem Betätigungsmechanismus auf dem Regalbediengerät zu kuppeln. Der Mitnehmer steht vorzugsweise über das Schiebergehäuse nach oben über und enthält hierzu eine Öffnung.

Die Öffnung kann von einer nach oben offenen Nut gebildet sein, die es ermöglicht, dass der betreffende Betätigungsmechanismus über eine einfache Schwenkbewegung den Eingriff mit dem Schieber herstellt.

Die Sicherungseinrichtung, die das Schiebergehäuse gegen Längsbewegung in der Aufnahmenut arretiert, kann sich aus zwei komplementären Struktureinrichtungen zusammensetzen, die formschlüssig miteinander zusammenwirken. Eine sehr einfache Ausführungsform besteht in einer Ausnehmung an der Unterseite des Gehäuses, die mit einem Steg oder einer Rippe an dem Fachboden zusammenwirkt.

Sehr einfach lässt sich diese Sicherungseinrichtung bei dem an der Unterseite des Schiebergehäuses vorhandenen Fortsatz integrieren. Hierzu weist der Fortsatz in diesem Bereich eine größere Höhe auf. Ein Verhaken wird mit Sicherheit verhindert, wenn der Fortsatz über eine Schrägfläche in den Bereich der Sicherungseinrichtung übergeht.

Die Antriebsmittel zum Bewegen des Schiebergehäuses oder des Schiebers alleine sind vorzugsweise dieselben Antriebsmittel. Sie können einen Schwenkarm aufweisen. Zum Herausziehen des Schiebers aus dem Schiebergehäuse ist nach der richtigen Positionierung des Regalbediengerätes lediglich ein Herunterschwenken des Schwenkarms und eine translatorische Bewegung in Richtung der Längsachse der Kuppelstange des Schiebers erforderlich.

Zum Einkuppeln an dem Schiebergehäuse wird ebenfalls der Schwenkarm verwendet, wobei allerdings zusätzlich noch eine kurze Querbewegung des Regalbediengerätes erforderlich ist. Dies vereinfacht wesentlich den Aufwand an Antriebsmittel auf Seiten des Regalbediengerätes, denn zum Umsetzen des Schiebergehäuses steht genügend Zeit zur Verfügung, da dies nicht allzu häufig stattfindet.

Im Übrigen sind Weiterbildungen der Erfindung Gegenstand von Unteransprüchen.

Beim Studium der Figurenbeschreibung wird außerdem klar, dass eine Reihe von Abwandlungen möglich sind, die durch die jeweiligen Gegebenheiten oder Anpassung veranlasst sind. Diese Abwandlung zusätzlich zu beschreiben würde den Umfang der Figurenbeschreibung unnötig aufblähen.

In der Zeichnung ist ein Ausführungsbeispiel des Gegenstandes der Erfindung dargestellt. Es zeigen:
- Fig. 1: Das Regallager gemäß der Erfindung, in einer vereinfachten perspektivischen Darstellung;
- Fig. 2: einen Ausschnitt aus einem der Fachböden des Regallagers nach Figur 1, in einer abgebrochenen perspektivischen Darstellung;
- Fig. 3: ein Schiebergehäuse für das erfindungsgemäße Regallager, in einer verkürzten perspektivischen Darstellung;
- Fig. 4: den Schieber für das Schiebergehäuse nach Figur 3, in einer verkürzten perspektivischen Darstellung;
- Fig. 5: das Schiebergehäuse mit eingesetztem Schieber, teilweise ausgezogen, in einer verkürzten Seitenansicht;

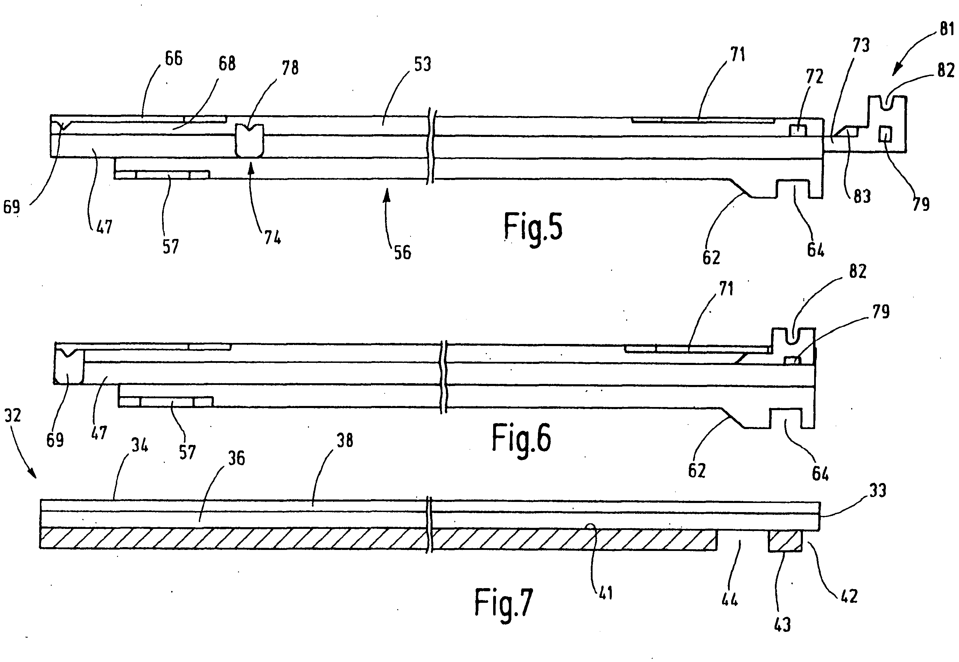

- Fig. 5: das Schiebergehäuse mit vollständig eingeschobenem Schieber, in einer verkürzten Seitenansicht;
- Fig. 7: einen Querschnitt durch den Fachboden im Bereich der Aufnahmenut für ein Schiebergehäuse; und

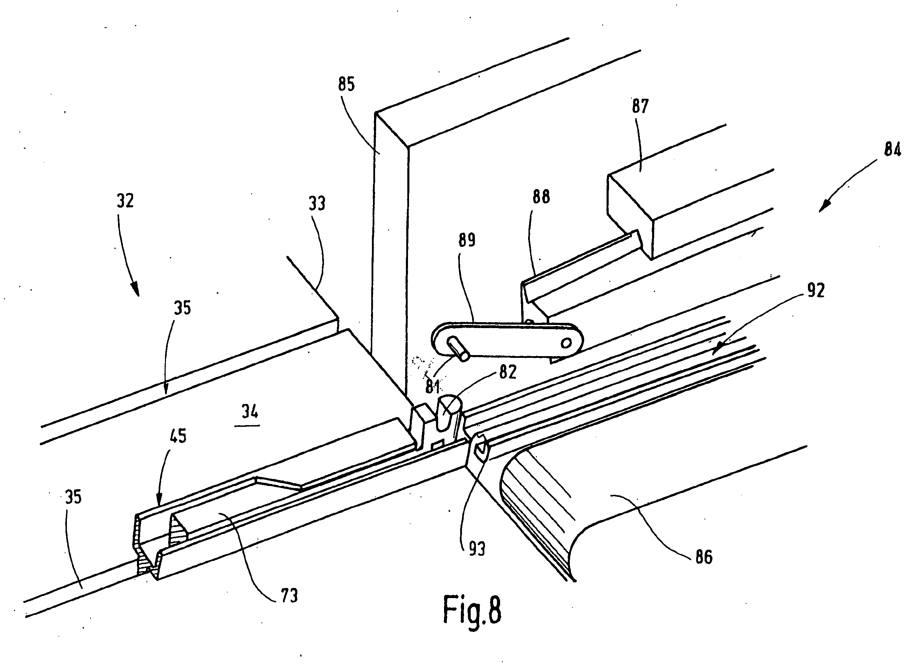

- Fig. 8: das Zusammenwirken von Schiebergehäuse und Regal- bediengerät, in einer vereinfachten perspektivischen Ausschnittsdarstellung.

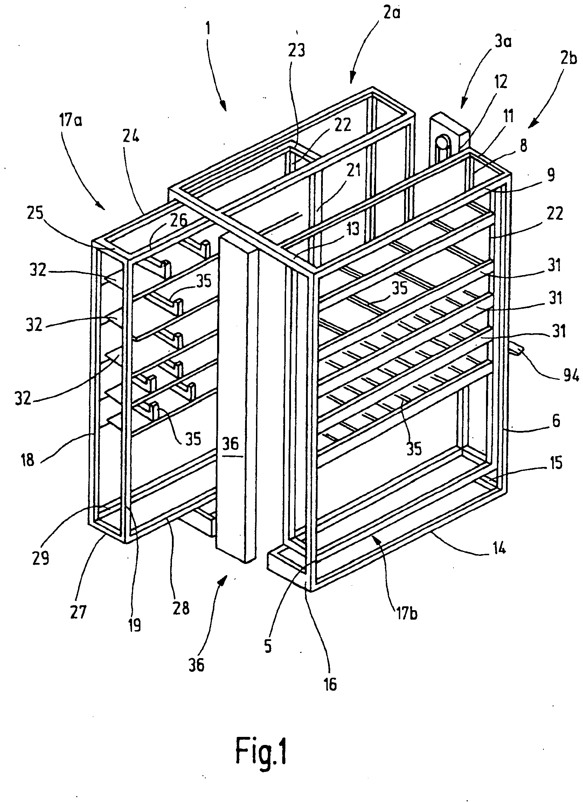

In der Figur 1 ist perspektivisch und schematisiert ein Regallager 1 veranschaulicht, wie es bspw. in Apotheken zum Aufbewahren und Lagern von verpackten oder unverpackten Medikamenten verwendet werden kann, die eine verhältnismäßig kurze Umschlagszeit aufweisen. Die Produkte/Stückgut sind in dem Regallager 1 chaotisch gespeichert, wobei in einem nicht veranschaulichten Computersystem darüber Buch geführt wird, wo welches Produkt eingelagert ist.

Zu dem Regallager 1 gehören zwei einander gegenüberstehende Regalgestelle 2a, 2b, die sich mit ihren Breitseiten im Abstand gegenüber befinden. Sie sind an einer oberen Querkante miteinander verbunden. In dem Zwischenraum zwischen den beiden Regalgestellen 2a und 2b ragen zwei vertikale Pfeiler 3a und 3b auf, an denen ein Regalbediengerät (Figur 8) vertikal geführt ist.

Jedes der beiden Regalgestelle 2a, 2b hat eine quaderförmige Außengestalt, wobei von dem Quader lediglich dessen Kanten in Gestalt von Profilstreben existieren.

Das Regalgestell 2b setzt sich aus drei vertikal aufragenden Pfeilern 5, 6, 7 zusammen, die an ihren Ecken jeweils durch Querstreben 9, 11 und entsprechende Querstreben unten verbunden sind, von denen lediglich die Querstreben 14, 15 und 16 erkennbar sind. Parallel zu den Querstreben 9 und 11 verlaufen weitere Querstreben 12 und 13, die endseitig, wie gezeigt, miteinander verbunden sind; dort fehlt der entsprechende vierte Pfeiler. Die Pfeiler 5 .... 7 und die Querstreben 9 .... 16 sind jeweils an den Ecken starr miteinander verbunden.

Das Regalgestell 2a ist in der gleichen Weise mit denselben Abmessungen aufgebaut, weshalb sich eine erneute Erläuterung erübrigt. Die Bezugszeichen des Regalgestells 2b gelten in der gleichen Weise für die spiegelbildlichen Konstruktionselemente des Regalgestells 2a.

In jedem der beiden Regalgestelle 2a und 2b sind zwei Ziehgestelle 17a und 17b längsverschieblich untergebracht. Sie sind bspw. mittels nicht gezeigter, an sich bekannter, Kugelführungen in dem jeweiligen Regalgestell 2a, 2b oben aufgehängt, wozu diese Führungselemente zweckmäßigerweise im Bereich der oberen Querstreben 9 und 12 angebracht sind. Auf diese Weise sind die beiden Ziehgestelle 17, wie am Beispiel des Ziehgestells 17a zu erkennen ist, zu der dem Betrachter zugekehrten Schmalseite der beiden Regalgestelle 2a, 2b herausziehbar. Das Herausziehen in der entgegengesetzten Richtung ist gesperrt, damit die beiden Ziehgestelle 17 im eingeschobenen Zustand eine definierte Endlage in dem betreffenden Regalgestell 2 aufweisen. Damit die Ziehgestelle ohne nennenswerten Spalt bis an das Regalbediengerät heranreichen können, fehlt, wie oben erwähnt, der vierte Pfeiler und die beiden Querbalken 13 sind direkt miteinander verbunden.

Ähnlich wie die Regalgestelle 2 ist das Ziehgestell 17a ein quaderförmiges Gebilde, von dem lediglich die Kanten in Gestalt von vertikal verlaufenden Streben 18, 19, 21, 22 und an den jeweiligen Enden angeordneten Querstreben 23 ... 29 bestehen. In der Darstellung ist die hintere untere Querstrebe des Ziehgestells 17a verdeckt.

Das Ziehgestell 17b ist in der identischen Weise ausgeführt, wie das Ziehgestell 17a, weshalb sich eine erneute Beschreibung erübrigt. Die Bezugszeichen des Ziehgestells 17a gelten sinngemäß in der gleichen Weise für die spiegelbildlichen Konstruktionselemente des Ziehgestells 17b.

Wie Figur 1 weiter zu entnehmen ist, bilden sowohl die Regalgestelle 2 als auch die Ziehgestelle 17 relativ große Flachseiten, die in jeder Betriebsstellung jeweils zueinander parallel sind. Diese Flachseiten, mit denen sich jeweils die beiden Regalgestelle 2a und 2b gegenüberstehen, werden als Vorderseite bezeichnet, d.h. jene Flachseite, die den Zwischenraum unmittelbar benachbart sind, in dem das Regalbediengerät läuft.

Die davon abliegenden Flachseiten werden als Rückseiten angesehen. Zwischen den vertikalen Streben 18 und 22 jedes Ziehgestell 17 erstrecken sich horizontal und damit parallel zu den Querstreben 24 und 26 mehrere Querbalken 31, die mit den vertikalen Streben 18 und 22 verstellbar verbunden sind. Verstellbar sind sie in dem Sinne, dass sie zumindest stufenweise in beliebige Höhe an den beiden vertikalen Streben 18 und 19 befestigt werden können, wobei sie jedoch immer in horizontaler Ausrichtung angeordnet sind.

Jeder der Querbalken 31 trägt eine zugehörigen Regalbodenplatte 32, die eben und flach ausgeführt ist. Alle Regalbodenplatten haben dieselbe räumliche Tiefe, gemessen ab der Vorderseite des betreffenden Ziehgestells. Die Tiefe ist zumindest so bemessen, dass die größte zu erwartende Verpackungseinheit in ihrer Länge der Tiefe nach in dem Regal zwischen der Vorderseite und der Rückseite unterzubringen ist. Wenn die Verpackungen kleiner sind, können zur Ausnutzung der Tiefe mehrere unterschiedliche Verpackung in einer Reihe hintereinander eingelagert werden.

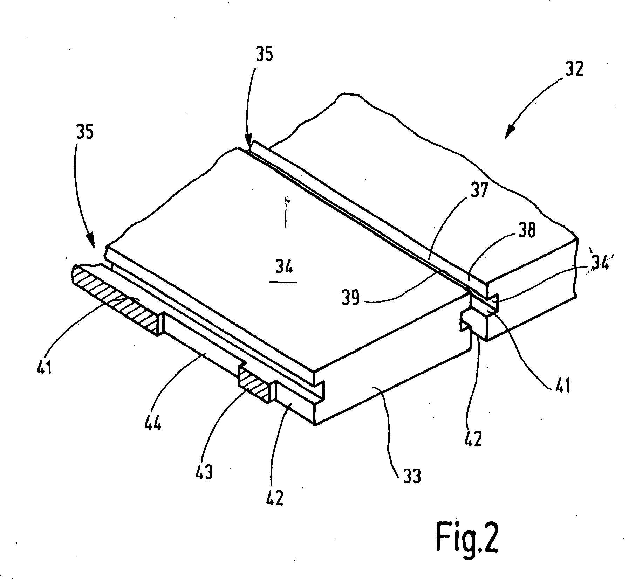

Figur 2 veranschaulicht in perspektivischer Darstellung einen Ausschnitt aus einer der Regalbodenplatten 32. Jede Regalbodenplatte 32 ist in Draufsicht rechteckig mit einer langen dem Betrachter zugekehrten Schmalseite 33, später auch als Vorderseite bezeichnet, sowie einer ebenen Auflagefläche 34. Parallel zu dieser dem Betrachter zugekehrten Auflagefläche 34 verläuft eine nach unten zeigende Unterseite, die nicht im Einzelnen erkennbar ist, jedoch ebenfalls eben ist.

In der Regalbodenplatte 32 sind äquidistant nebeneinander eine Vielzahl von Aufnahmenuten 35 enthalten, die als T-Nuten ausgeführt sind. Die Aufnahmenuten 35 durchsetzen die vordere Schmalseite und ggfs. auch die vom Betrachter abliegende hintere Schmalseite. Jede der T-Nuten setzt sich aus einer Nutenkammer 36 und einem Nutenschlitz 37 zusammen. Der Nutenschlitz 37 weist einen rechteckigen Querschnitt auf und wird seitlich von zwei Schlitzwänden 38 und 39 begrenzt. Der Nutenschlitz 37 öffnet sich zur Auflagefläche 34.

Die Nutenkammer 36 weist ebenfalls einen rechteckförmigen Querschnitt auf, die, wie Figur 2 erkennen lässt, in Richtung parallel zur Längserstreckung der Auflagefläche 34 breiter als der Nutenschlitz ist, so dass ein Hinterschnitt in der Aufnahmenut 35 entsteht. Die Nutenkammer 36 wird auf ihrer dem Nutenschlitz 35 gegenüberliegenden Seite von einem ebenen Nutenboden 41 begrenzt.

Um eine ausreichende Stabilität der Regalbodenplatte 32 zu erhalten, ist die Wandstärke zwischen dem Nutenboden 41 und der Unterseite der Regalbodenplatte 32 entsprechend groß gewählt. Ausgehend von der Schmalseite 33 führt ein Schlitz 42 ein Stück weit in die Regalbodenplatte 32 hinein bis zu einem Steg 43. Der Schlitz 42 durchsetzt sowohl den Nutenboden 41 als auch die Unterseite der Regalbodenplatte 32. Der Schlitz 42 ist parallelflankig ausgeführt und hat eine Weite, die der Weite des Nutenschlitzes 37 entspricht. In vertikaler Richtung gesehen, fluchtet der Schlitz 42 mit dem Nuterischlitz 37.

Zur Veranschaulichung der Struktur ist der gezeigte Ausschnitt aus der Regalbodenplatte 32 längs der linken erkennbaren Aufnahmenut 35 geschnitten.

Der Anschluss an den Steg 43 enthält der Nutenboden 41 eine rechteckige Öffnung 44, deren Breite, gemessen in Richtung der parallel zur Längserstreckung der Schmalseite 33, genauso breit ist wie der Nutenschlitz 37 weit ist. Die Länge der rechteckigen Öffnung 44 und die Breite des Stegs 43 ergeben sich aus der weiteren Beschreibung.

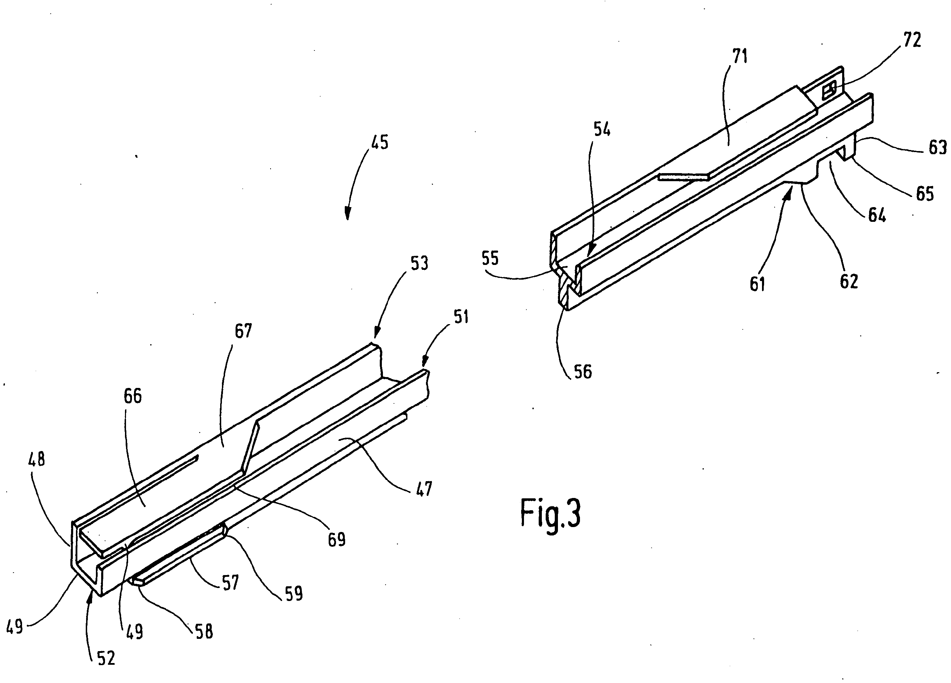

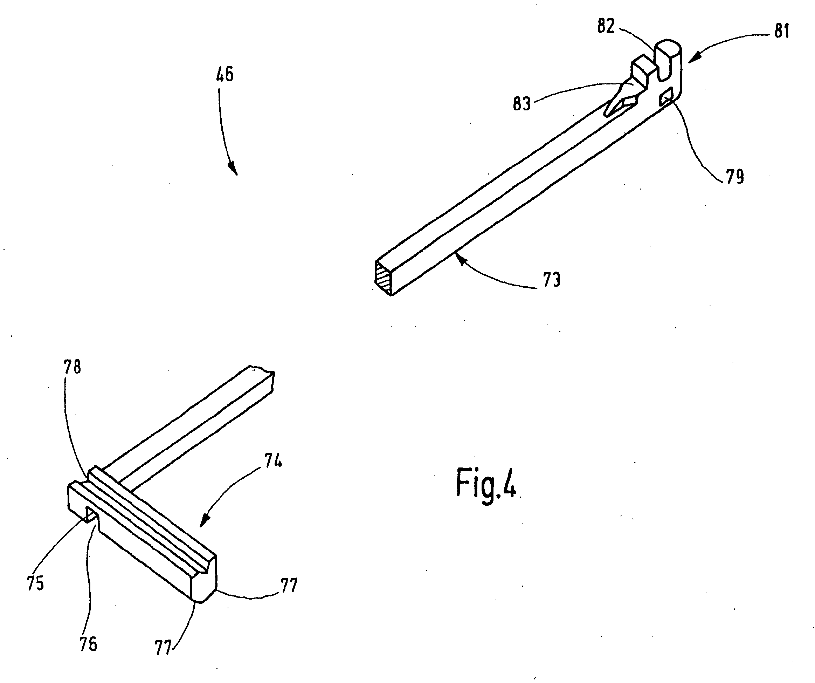

Die Aufnahmenuten 35 dienen der Aufnahme und Halterung von Schiebergehäusen 45, von denen eines in Figur 3 gezeigt ist. In den Schiebergehäusen 45 sind Schieber 46 längsverschieblich geführt. Einer der Schieber 46 ist in Figur 4 perspektivisch verkürzt gezeigt.

Das Schiebergehäuse 45 weist einen im Wesentlichen rechteckigen Außenquerschnitt auf, der sich über die Länge des Schiebergehäuses 45 nicht ändert. Es wird von zwei zueinander parallelen Flankenflächen 47 und 48 sowie einer ebenen Bodenunterseite oder Bodenfläche 49 begrenzt. Die beiden Flankenflächen 47 und 48 stehen 47 im Gebrauch auf der Auflagefläche 34 senkrecht. Sie verlaufen über die gesamte Länge des Schiebergehäuses 45 zueinander parallel. Die Flankenfläche 47 bildet die Außenseite einer über die Länge durchlaufenden Seitenwand 51, die von einem Boden 52 aufragt. Auf der der Seitenwand 51 gegenüberliegenden Seite ragt von dem Boden 52 eine weitere Seitenwand 53 auf, die, wie sich aus der weiteren Beschreibung ergibt, eine etwas größere Höhe gegenüber dem Boden 52 hat wie die Seitenwand 51. Zwischen den Seitenwänden 52 und 54, sowie der Oberseite des Bodens 52, wird eine rechteckige Führungsnut 54 begrenzt. Die Führungsnut 54 hat über die Länge des Schiebergehäuses 45 einen konstanten rechteckigen Querschnitt. Sie ist nach unten von einem glatten Nutenboden 55 begrenzt.

Aus der Unterseite 49 ragt mittig eine Führungsleiste 56 vor, deren Breite der Breite des Nutenschlitzes 37 entspricht. Die Tiefe der Leiste 56 ist so bemessen, dass sie gerade eben nicht auf den Nutenboden 41 aufstößt, wenn das Schiebergehäuse 45 mit seiner Unterseite 49 auf der Auflagefläche 34 aufliegt.

Die Führungsleiste 56 beginnt unmittelbar am vorderen Ende des Schiebergehäuses 45, d.h. an jenen Ende, dass bei eingesetztem Schiebergehäuse 45 der Schmalseite 33 benachbart ist. Am anderen endet sie ein Stück weit davor, ca. 15 mm. Die Führungsleiste 56 ist an diesem Ende mit zwei seitlich auskragenden, flanschartigen Fortsätzen 57 versehen, die in Längsrichtung der Führungsleiste 56 gesehen, ca. 20 mm lang sind. Die beiden flanschartigen Fortsätze 57 liegen unmittelbar auf gleicher Höhe und sind von der Unterseite des Bodens 52 so beabstandet, dass sie klemmfrei in der Nutenkammer 36 gleiten können. Zum besseren Einfädeln sind sie an den Stirnseiten bei 58 und 59, wie gezeigt, abgeschrägt.

Um das Schiebergehäuse 45 in der Aufnahmenut 35 verhaken zu können, ist sie am anderen Ende mit einem nach unten ragenden Fortsatz 61 versehen, der die Breite der Führungsleiste 56 hat und über diese etwa um die Höhe der Führungsleiste 56 vorsteht. Der Fortsatz 61wird in Richtung zu dem hinteren Ende des Schiebergehäuses 45 von einer Schrägfläche 62 und am anderen Ende von einer geraden Kante 63 begrenzt, die unmittelbar mit dem benachbarten Stirnende des Schiebergehäuses 45 fluchtet. In den Bereichen dazwischen enthält der Fortsatz 61 eine Ausnehmung 64, die nach unten zu offen ist, so dass zwischen der geraden Kante und der Ausnehmung 64 ein Zapfen 65 verbleibt.

Die Ausnehmung 64 wird in Längsrichtung der Führungsleiste 56 von glatten Flächen begrenzt, die rechtwinklig zu der Längsachse des Schiebergehäuses 45 liegen.

Wie sich aus der späteren Funktionsbeschreibung ergeben wird, dient die Ausnehmung 64 in Verbindung mit dem Steg 43 als Sicherungseinrichtung, um das Schiebergehäuse 45 in Längsrichtung der Aufnahmenut 35 gegen Bewegungen zu sichern. Die Weite der Ausnehmung 64 ist so bemessen, dass sie mit mäßigem Spiel, ohne zu haken, den Steg 43 übergreifen kann.

Um einem Verhaken beim Einschieben in das Regalbediengerät bzw. in die Aufnahmenut 35 zu verhindern, kann die Führungsleiste 56 an den in Längsrichtung liegenden Enden zugespitzt sein.

Um den Schieber 46 sicher in dem Schiebergehäuse 45 zu halten, ist am rückwärtigen Ende des Schiebergehäuses 45 eine von oben wirkende Blattfeder 66 vorhanden, die am rückwärtigen Ende der Seitenwand 53 und im Abstand von diesem über einen schmalen Steg 67 einstückig mit der Oberkante der Seitenwand 53 verbunden ist. die Blattfeder 66 überdeckt sowohl die Führungsnut 54 als auch die Oberseite der Seitenwand 47, die um die Dicke der Blattfeder 66, sowie eines Spaltes 68, niedriger ist. Der Spalt 68 soll, wie weiter unten beschrieben ist, den Durchgang eines Teils des Schiebers 46 ermöglichen. In der Nähe des freien Endes der Blattfeder 66 und somit in der Nähe des hinteren Endes des Schiebergehäuses 45 befindet sich eine nach unten zeigende Rastrippe 69, die über die Breite der Blattfeder 66 durchläuft und einen dreieckförmigen Querschnitt aufweist.

In der Nähe des vorderen Endes wird die Position des Schiebers 46 mit Hilfe eines dachförmigen Fortsatzes 71 gewährleistet. Der dachförmige Fortsatz 72 beginnt im Abstand von dem vorderen Stirnende des Schiebergehäuses 45 und ist einstückig an die Seitenwand 53 angeformt. Das Dach 71 weist etwa eine ähnliche Gestalt auf, wie die Blattfeder 66, mit dem entsprechenden Abstand von der Oberseite der Seitenwand 47. Ist jedoch nicht federnd ausgebildet, sondern über die gesamte Länge, wie gezeigt, mit der Seitenwand 53 verbunden.

Zwischen dem vorderen Ende und dem dachförmigen Fortsatz enthält das Schiebergehäuse 45 in der Seitenwand 53 eine rechteckförmige Öffnung 72, deren Ränder sowohl von dem Nutenboden 55 als auch vom oberen Rand der Seitenwand 53 beabstandet sind. Die Funktion der Öffnung 72 ist weiter unten im Einzelnen beschrieben und dient dazu, das Schiebergehäuse 45 zu bewegen oder umzusetzen.

Figur 4 zeigt den Schieber 46. Wie zu erkennen ist, weist der Schieber 46 eine längliche Kuppelstange 72 sowie einen daran angeformten Mitnehmer 73 auf. Die Kuppelstange ist im Querschnitt quadratisch mit einer Höhe entsprechend etwa der Höhe der Seitenwand 47, gemessen ab dem Nutenboden 55.

Der Mitnehmer 74 ist mit der Kuppelstange 73 über einen Arm 75 verbunden, der an der Oberseite der Kuppelstange 73 angeformt ist und einstückig in den Mitnehmer übergeht. Der Arm 75 passt ohne zu Klemmen durch den Spalt 68. Dadurch entsteht zwischen dem Mitnehmer 44 und der benachbarten Flanke der Kuppelstange 73 eine nach unten zeigende Ausnehmung 76, die im Gebrauchszustand in die Seitenwand 51 übergreift. Der Mitnehmer 74 erstreckt sich rechtwinklig zu der Längsachse der Kuppelstange 73 und weist ein im Wesentlichen rechteckiges Querschnittsprofil auf, das an der Unterseite mit Fasenflächen 77 versehen ist und bei Gebrauch auf der Auflagefläche 34 gleitet.

Der Arm 75 enthält eine Nut 78, die als Rastnut dient und mit der Rastrippe 69 zusammenwirkt. Beide Teile sind entsprechend aufeinander abgestimmt.

Am anderen Ende ist die Kuppelstange 73 mit einer rechteckförmigen Öffnung 79 versehen, die mit der Öffnung 72 fluchtet, wenn die Rastnut 78 mit der Rastrippe 69 verrastet ist. Die Öffnung 79 erstreckt sich quer zur Längsachse der Kuppelstange 73. Im Gebrauchszustand ist ihre Achse parallel zu der Auflagefläche 34.

Oberhalb der Öffnung 79 befindet sich ein nach oben aufregender Fortsatz 81 mit einer Breite entsprechend der Breite der Kuppelstange 73. In dem Fortsatz 81 ist eine nach oben offene Mitnehmernut 82 eingeformt, die von Flankenflächen begrenzt ist, die in jeder Achse zueinander parallel sind. Die Achse der Mitnehmernut 82 liegt quer zu der Längsachse der Kuppelstange 73.

Im Anschluss an den Fortsatz 81 liegt auf der Oberseite der Kuppelstange 73 eine Rampe 83, die bei eingeschobenem Schieber 46 unter den dachförmigen Fortsatz 71 greift, damit mit Sicherheit das benachbarte Ende der Kuppelstange 73 auf den Nutenboden 54 niedergedrückt ist. Der Schieber 46 besteht aus einem einstückigen gespritzten Kunststoffformteil, so dass geringfügige Verwerfungen nicht ausgeschlossen sind, weshalb die Rampe 83 zusammen mit den dachförmigen Fortsatz 71 sicherstellt, dass die Öffnung 79 mit der Öffnung 72 in jedem Falle fluchtet auch dann, wenn sich die Kuppelstange 73 in der einen oder anderen Richtung durchbiegen sollte.

Die Anordnungen sind massiv gezeichnet. Der Fachmann versteht jedoch sofort, dass weitere Nuten und Schlitze enthalten sein können, um Kunststoffmaterial zu sparen.

Figur 5 zeigt das Zusammenwirken des Schiebers 46 mit dem Schiebergehäuse 45 und zwar in einer Seitenansicht auf die Seitenwand 47. Der Schieber 46 ist ein Stück weit herausgezogen, so weit bis der Mitnehmer 74 unter der Blattfeder 46 freigekommen ist. Damit steht das andere Ende des Schiebers 46 mit dem nach oben aufragenden Fortsatz 81 über das betreffende Stirnende vor.

Wie bereits in Figur 5 zu erkennen ist, befindet sich die Unterseite des Mitnehmers 74 auf der Höhe der Unterseite 49 des Bodens 52 und damit auf der Höhe der Auflagefläche 34.

Figur 6 zeigt das Zusammenspiel aus Schiebergehäuse 45 und Schieber 46 im vollständig eingeschobenen Zustand. Die Rastnut 78 ist mit der Rastrippe 69 verrastet und die nach oben zeigende Rampenfläche 83 liegt unter dem dachförmigen Fortsatz 71. In dieser Position fluchtet die Öffnung 79 mit der unmittelbar dahinter befindlichen Öffnung 72.

Wie weiter die Figuren 6 und 7 in der Zusammenschau erkennen lassen, ist die Ausnehmung 64 in der Lage, den Steg 43 zu übergreifen, wobei jener hintere Teil des Fortsatzes 61, der von der Ausnehmung 64 ausgeht, in die Öffnung 44 eindringen kann.

Der Schlitz 42 nimmt den Zapfen 65 auf.

Die beiden flossenartigen seitlichen Fortsätze 75 sichern an dem betreffenden Ende das Schiebergehäuse 45 in vertikaler Richtung, indem sie mit entsprechenden Spiel seitlich in die Nutenkammer 36 eingreifen.

Die flossenartigen Fortsätze 57 sind so gestaltet, dass sie eine geringfügige Kippbewegung des Schiebergehäuses 45 um eine Achse nicht behindern, die parallel zu der Auflagefläche 34 liegt und rechtwinklig zu der Längsachse des Schiebergehäuses 45 ausgerichtet ist. Auf diese Weise ist es möglich, die Verhakung zwischen dem Steg 43 und der Ausnehmung 64 aufzuheben, indem am betreffenden Ende das Schiebergehäuse ein entsprechendes Stück angehoben wird.

Figur 8 zeigt in einer perspektivischen Ausschnittsdarstellung das Zusammenwirken zwischen einem Regalbediengerät 84 und dem zuvor erläuterten Schiebergehäuse 45 mit darin sitzendem Schieber 46. Ferner ist ein Ausschnitt aus einer Regalbodenplatte 32 veranschaulicht. Man kennt die darin enthaltenen Aufnahmenuten 35, die Auflagefläche 34 und ein Kante der vom Betrachter weg zeigende Schmalseite 33, die definitionsgemäß die Vorderseite oder Vorderkante der Regalbodenplatte 32 aus der Sicht des Regalbediengerätes 34 darstellt. Von dem Regalbediengerät 84 ist ein Teil eines Gestells 85 gezeigt, das nicht weiter gezeigte Motoren und Elektronik aufnimmt und dazu vorgesehen ist, zwischen den Säulen 36 zu laufen. Aus dem Regalbediengerät 54 befindet sich ein schematisch angedeutetes Förderband 86 ausreichender Breite, mit dem nicht weiter gezeigte eingelagerte Produkte vollständig auf das Regalbediengerät 84 geschafft werden oder in Richtung auf den Fachboden zurücktransportiert werden. An dem Gestell 85 ist oberhalb und neben dem Förderband 86 eine Linearführung 87 vorgesehen, mit Hilfe derer, eine Betätigungsstange 88 verschieblich gelagert ist. Die Betätigungsstange 88 kann sich in Richtung parallel zu der Längserstreckung des Schiebergehäuses 45 bewegen, d.h. parallel zu der Auflagefläche 34 und in Längsrichtung der Aufnahmenut 35. Am vorderen Ende der Betätigungsstange 88 sitzt ein schwenkbarer Hebel 89 mit einem seitlich vorstehenden zylindrischen Zapfen 91. Der Hebel 89 kann mit Hilfe eines nicht weiter gezeigten Elektromotors gesteuert auf und ab bewegt werden, um eine Achse, die parallel zu der Vorderkante 33 liegt.

Unterhalb des Zapfens 91, der sich quer zu dem Weg der Betätigungsstange 88 erstreckt und horizontal zeigt, befindet sich eine Aufnahmeschiene 92 mit einem im Boden vorhandenen Schlitz 93.

Die Funktionsweise der erläuterten Anordnung ist wie folgt:

Es sei angenommen, dass sich, wie gezeigt, in einer der Aufnahmenuten 35 ein Schiebergehäuse 45 befindet und zwar so, dass die Ausnehmung 64 auf dem Steg 43 verhakt ist. Damit ist das benachbarte Ende des Schiebergehäuses 45 mit der Vorderseite 33 bündig.

Der Schieber 46 ist eingeschoben, damit steht kein Teil des Schiebers 46 über die Vorderkante 33 über. Der Mitnehmer in Figur 8 in der abgebrochenen Darstellung nicht mehr erkennbar ist, befindet sich in der Nähe des hinteren Endes der Regalbodenplatte 32. Er ist, wie aus Figur 6 erkennbar, mit Hilfe der Rastrippe 69 verrastet.

Entsprechend der gewünschten Breite einer Speichergasse, in der einzulagernde Produkte hintereinander liegen, befindet sich im entsprechenden Abstand ein weiteres Schiebergehäuse 45 mit darin befindlichen Schieber 46, und zwar in der eben beschriebenen Stellung.

Vom Grundsatz her, erfolgt die Beschickung, Entnahme und Speicherung so wie dies in der DE 101 40 958 ausführlich erläutert ist.

Um ein Produkt auf einer zwischen benachbarten Schiebergehäusen 45 gebildeten Speichergasse zu entnehmen, wird das Regalbediengerät 84 vor die betreffende Speichergasse gebracht.

In der Halteposition fluchtet die Aufnahmeschiene 92 mit dem benachbarten Schiebergehäuse 45. Der Schwenkhebel 89 ist ein Stück weit, wie gezeigt, angehoben und im Übrigen war er mit Hilfe der Betätigungsstange 88 hinter die Außenkontur des Regalbediengerätes 84 genügend weiter zurückgezogen, damit er bei der Fahrbewegung des Regalbediengerätes 84 nicht mit anderen Regalbodenplatten 33 kollidiert, wenn sich das Regalbediengerät 84 auf und ab bewegt.

Bei Erreichen der richtigen Halteposition, wird die Betätigungsstange 88 ein Stück weit vorgeschoben bis sich der Zapfen 91 über der Mitnehmernut 82 befindet. Sodann wird der Schwenkhebel 89 nach unten bewegt, um den Zapfen 91 mit der Mitnehmernut 82 in Eingriff zu bringen. Es besteht jetzt eine formschlüssige Kupplung zwischen dem Schieber 46 und dem Antriebssystem auf dem Kommissioniergerät 54. Durch Ingangsetzen des entsprechenden Motors wird die Betätigungsstange 88 von dem betreffenden Fachboden 34 weg bewegt. Diese weg gerichtete Bewegung verursacht, dass der Schieber 46 aus den Schiebergehäuse 45 heraus und damit von der Regalbodenplatte 32 heruntergezogen wird. Er gelangt hierbei auf das Regalbediengerät 84 in die entsprechend konfigurierte Aufnahmeschiene 92. Diese enthält eine Vertiefung um die Kuppelstange 73 zu führen.

Bei der Bewegung gleitet der Mitnehmer 74 auf der Auflagefläche 34 durch die Speichergasse, die, wie erwähnt, zwischen zugehörigen Schiebergehäuse 45 und dem benachbarten Schiebergehäuse gebildet ist. Die in dieser Speichergasse liegende Kette von aufeinanderfolgenden Produkten wird von der Regalbodenplatte 32 herunter gezogen und auf das Förderband 86 geschafft. Die Bewegung des Schiebers 46 wird gestoppt sobald das gewünschte Produkt auf dem Förderband 86 zur Gänze liegt. Anschließend wird von dem gesteuerten Antrieb die Betätigungsstange 88 wieder vorgeschoben, um den Schieber 46 in die Ausgangsstellung auf der Regalbodenplatte 32 zu schaffen. In der Endstellung ist die Rastnut 78 mit der Rastrippe 69 verrastet.

Nachdem diese Position erreicht ist, wird die durch den betreffenden gesteuerten Motor der Schwenkhebel 89 nach oben bewegt, um den Zapfen 91 aus der Mitnehmernut 82 herauszuheben. Nach dem Entkuppelvorgang wird die Betätigungsstange 88 zurückbewegt, um den Schwenkhebel 89 hinter das Lichtraumprofil des Regalbediengerätes 84 zurückzuziehen. Das Regalbedientgerät 84 kann jetzt zu einer Kommissionierstation laufen, um dort das gewünschte Produkt auszugeben. Anschließend fährt es an die ursprüngliche Speichergasse zurück, falls sich noch weiter Produkte aus dieser Speichergasse auf dem Förderband 86 befinden, um diese wieder in die betreffende Speichergasse zurückzugeben.

Hinsichtlich des Ein- und Auslagerns von Produkten in den Speichergassen zwischen benachbarten Schiebergehäusen 45 unterscheidet sich das neue Regallager nicht von der Anordnung nach der DE 101 40 958 A1, auf die hier ausdrücklich Bezug genommen ist.

Zusätzlich ist es möglich, jederzeit die Breite der Speichergasse zu verändern, indem das Schiebergehäuse 45 zusammen mit den darin sitzenden Schiebern 46 umgesetzt wird. Der Ablauf hierbei ist Folgender:

Das Regalbediengerät fährt in einer Position, ähnlich der Position, wie zum Entnehmen des Produktes jedoch ein solches Stück in Richtung parallel zur Vorderkante 33 der Regalbodenplatte 32 vesetzt, wie es der Länge des Zapfens 91 entspricht. Wenn diese Position erreicht ist, wird der Schwenkhebel 89 heruntergeschwenkt und mit Hilfe der Betätigungsstange 88 weit genug vorgeschoben, bis seine Achse mit der Achse der Öffnung 72 und der Öffnung 79 fluchtet. Nunmehr fährt das Regalbediengerät 54 mit dem Zapfen 91 auf das betreffende Schiebergehäuse 45 zu. Der Zapfen 91 dringt in die miteinander fluchtenden Öffnungen 72 und 79 ein.

Die fluchtende Stellung zwischen diesen beiden Öffnungen 72 und 79 wird jedesmal erreicht, wenn der Schieber in die Ruhestellung in dem Schiebgehäuse 45 zurückgeschoben ist und die Rastnut 78 mit der Rastrippe 69 verrastet ist. In der jetzt erhaltenen Eingriffsstellung zwischen dem Zapfen 91 und den beiden Öffnungen 72 und 79 wird der Schwenkhebel 89 ein kleines Stück angehoben, so weit bis die Ausnehmung 64 von dem Steg 43 freikommt. Damit ist die Sicherungseinrichtung, der eine Längsbewegung des Schiebergehäuses 45 auf der Regalbodenplatte 32 verhindert, entriegelt. Das Schiebergehäuse 45 samt darin sitzenden Schiebern 46 wird auf das Regalbediengerät in die Aufnahmeschiene 92 geschafft.

Wenn das Schiebergehäuse 45 vollständig auf das Regalbediengerät 84 geschafft ist, fährt das Regalbediengerät in die neue Position für das Schiebergehäuse 45. Diese kann entweder eine Position in einem in dem Regallager vorgesehener Speicher für nicht gebrauchte Schiebergehäuse 45 sein oder bspw. die benachbarte Aufnahmenut 35.

Sobald das Regalbediengerät 84 die richtige Position erreicht hat, in der die Aufnahmeschiene 92 mit der gewünschten Aufnahmenut 35 fluchtet, wird die Betätigungsstange in Richtung auf die Aufnahmenut 35 vorgeschoben. Das Führungsschienengehäuse 45 gleitet mit den flossenartigen Fortsätzen 57 voraus in die Nutenkammer 36 der Aufnahmenut 35. Da der Zapfen 91 sowohl mit dem Schiebergehäuse 45 als auch mit dem Schieber 46 unmittelbar in Eingriff steht, können bei keiner Bewegung weder beim Herausnehmen noch beim jetzt beschriebenen Wiedereinsetzen Relativbewegungen zwischen dem Schieber 46 und dem Schiebergehäuse 45 entstehen. Die richtige Lage zwischen Schiebergehäuse und Schieber bleibt also ständig aufrecht erhalten und kann durch Bewegungsvorgänge nicht beeinträchtigt werden.

Die Vorschubbewegung des Betätigungsarms 88 ist beendet sobald die Ausnehmung 64 des Schiebergehäuses 45 mit dem Steg 43 in der Regalbodenplatte 32 fluchtet. Jetzt wird der Arm 89 heruntergeschwenkt, um die Sicherungseinrichtung zu aktivieren, indem die Ausnehmung 64 reiterartig den Steg 43 übergreift.

Das Regalbediengerät 84 fährt anschließend seitwärts, um den Zapfen 91 aus den Öffnungen 79 und 72 herauszuziehen.

Nach dem Umsetzen des Schiebergehäuses 45 mit den darin sitzenden Schieber 46 befindet sich der Schieber 46 zwangsläufig in derselben Stellung wie nach dem Ein- und Auslagern von Gegenständen, da die richtige Relativstellung während der Bewegung immer durch den Zapfen 91, der den Schieber 46 mit dem Schiebergehäuse 45 formschlüssig kuppelt vorhanden ist.

Der Fortsatz in Gestalt der Leiste 56 an dem Boden 52 des Schiebergehäuses 45 ist so gestaltet, dass durch auftretende Querkräfte das Schiebergehäuse 45 nicht aus der Aufnahmenut 35 herausgekippt werden kann. Dies wird am hinteren Ende durch die flossenartigen Fortsätze 57 erreicht und am vorderen Ende durch den weiter nach unten vorspringenden Fortsatz 61 mit der darin enthaltenen Ausnehmung 64.

Da bei eingesetztem Schiebergehäuse 45 die Ausnehmung 64 den Steg 43 übergreift, können in Längsrichtung des Schiebergehäuses 45 wirkende Kräfte, die von streifenden Gegenständen herrühren, das Schiebergehäuse nicht in Längsrichtung der Aufnahmenut 35 verschieben. Bei der vorliegenden Figurenbeschreibung wurde ein Schiebergehäuse gezeigt und erläutert, bei dem die Leiste 56, die in die Aufnahmenut 35 eingreift, symmetrisch zwischen den beiden Seitenwänden 51 und 53 angeordnet ist. Damit ergibt sich der Rasterabstand zwangsläufig immer aufgrund des Abstands von benachbarten Aufnahmenuten. Dieser Abstand ist in Figur 2 übertrieben dargestellt, um das Wesentliche der Erfindung erkennen zu lassen. In der Praxis beträgt der Abstand zwischen benachbarten Aufnahmenuten ca. 15 mm.

Dieser Rasterabstand lässt sich vergrößern, wenn zwei Arten von Schiebergehäusen 45 verwendet werden. Bei der einen Gruppe von Schiebergehäusen ist die Leiste 56 in Verlängerung der Seitenwand 53 angeordnet, während bei der anderen Gruppe die Leiste 56 nach unten in Verlängerung der Seitenwand 51 angeordnet ist.

Hierdurch lässt sich die Breite der Speichergasse bei Verwendung derselben Aufnahmenut 35 verändern, indem entweder das Gehäuse der einen Art oder das Schiebergehäuse der anderen Art eingesetzt wird. Die Speichergassenbreite variiert dadurch etwa um die Breite des Schiebergehäuses.

Bei einem Apothekenregallager sind in Gestellen übereinander mehrere Regalböden enthalten. Jeder Regalboden enthält mehrere Aufnahmenuten, die sich in Richtung der Tiefe des Regalbodens erstrecken. In einigen der Aufnahmenuten sitzen Schiebergehäuse mit Hilfe einer lösbaren Sicherungseinrichtung in Richtung parallel zur Längserstreckung der Aufnahmenut in der Aufnahmenut verriegelt sind. Deswegen können sie durch streifende Gegenstände nicht verschoben werden. Andererseits ist es möglich, mit Hilfe des Regalbediengerätes ein Schiebergehäuse samt Schieber aus der Nut zu entnehmen und an eine andere Stelle umzusetzen.

## Patentansprüche

1. Regallager (1)
mit wenigstens einem Fachboden (32), der eine ebene Auflagefläche (34) für einzulagernde Gegenstände aufweist und der wenigstens einer geraden Aufnahmenut (35) enthält,
mit wenigsten einem Schiebergehäuse (45), das an seiner Unterseite (52) einen in die Aufnahmenut (35) einführbaren Fortsatz (56) aufweist und das eine Führungsnut (54) enthält,
mit einer lösbaren Sicherungseinrichtung (43,64), die zwischen dem Schiebergehäuse (45) und dem Fachboden (32) wirksam ist die zwei Funktionsstellungen aufweist, wobei sie in einer Funktionsstellung eine Bewegung des Schiebergehäuses (45) in dessen Längsrichtung auf dem Fachboden (32) sperrt und in der anderen Funktionsstellung die Bewegung nicht sperrt,
mit einem Schieber (46), der eine Kuppelstange (73) und einen an der Kuppelstange (73) sitzenden Mitnehmer (74) aufweist, wobei die Kuppelstange (73) in der Führungsnut (54) des Schiebergehäuses (45) längsverschieblich geführt ist und der Mitnehmer (74) quer zu dem Schiebergehäuse (45) ausgerichtet ist und von dem Schiebergehäuse (45) auskragt, um den Gegenstand oder die Gegenstände von dem Fachboden (32) herunter zu befördern,
mit einem Regalbediengerät (84), das dazu eingerichtet ist vor jedes der Regalfächer bewegt zu werden,
mit Antriebsmitteln (87,88,89,91) für den Schieber (46), die auf dem Regalbediengerät (84) angeordnet sind und die dazu eingerichtet sind, mit dem Schieber (46), wahlweise lösbar, gekuppelt zu werden, um den Schieber (46) zumindest im Sinne eines Herausbeförderns von Gegenständen aus dem Regalfach in Bewegung zu setzen, und
mit Antriebsmitteln (87,88,89,91) zum Lösen der Sicherungseinrichtung (43,64) und zum Bewegen des Schiebergehäuses (45).

2. Regallager nach Anspruch 1, **dadurch gekennzeichnet, dass** das Regallager (1) eine Vielzahl von Fachböden (32) aufweist.

3. Regallager nach Anspruch 1, **dadurch gekennzeichnet, dass** der Fachboden (32) im Wesentlichen eben ist.

4. Regallager nach Anspruch 1, **dadurch gekennzeichnet, dass** der Fachboden (32) horizontal ausgerichtet ist.

5. Regallager nach Anspruch 1, **dadurch gekennzeichnet, dass** der Fachboden (32) in wenigstens einer Achse, vorzugsweise in zwei Achsen, horizontal ausgerichtet ist.

6. Regallager nach Anspruch 1, **dadurch gekennzeichnet, dass** der Fachboden (32) aus einem Strangpressprofil besteht, vorzugsweise aus Kunststoff.

7. Regallager nach Anspruch 1, **dadurch gekennzeichnet, dass** in dem Fachboden (32) eine Vielzahl von Aufnahmenuten (35) parallel nebeneinander enthalten sind.

8. Regallager nach Anspruch 7, **dadurch gekennzeichnet, dass** die Aufnahmenuten (35) äquidistant nebeneinander längs der Längenerstreckung des Fachbodens (32) verteilt sind.

9. Regallager nach Anspruch 1, **dadurch gekennzeichnet, dass** der Fachboden (32) eine rechteckige Auflagefläche (34) bildet.

10. Regallager nach Anspruch 1, **dadurch gekennzeichnet, dass** die lange Kante (33) des Fachbodens (32) dem Regalbediengerät (84) gegenüber steht.

11. Regallager nach Anspruch 1, **dadurch gekennzeichnet, dass** sich der Querschnitt der Aufnahmenut (35) aus einer Nutenkammer (36) und einem Nutenschlitz (37) zusammensetzt, wobei sich der Nutenschlitz (37) nach oben durch die Auflagefläche (34) hindurch öffnet und eine Weite aufweist, die kleiner ist als die Querabmessung der Nutenkammer (36).

12. Regallager nach Anspruch 11, **dadurch gekennzeichnet, dass** die Nutenkammer (36) einen Rechteck- oder Kreisquerschnitt aufweist.

13. Regallager Anspruch 1, **dadurch gekennzeichnet, dass** die Führungsnut (54) des Schiebergehäuses (45) im Wesentlichen hinterschneidungsfrei ist.

14. Regallager Anspruch 1, **dadurch gekennzeichnet, dass** das Schiebergehäuse (45) mit einer Rasteinrichtung (66,69) für den Schieber (46) versehen ist.

15. Regallager Anspruch 1, **dadurch gekennzeichnet, dass** die Rasteinrichtung (66,69) eine Blattfeder umfasst, an deren Unterseite ein Rastglied (69) ausgebildet ist, das zu einem Rastglied (78) an dem Schieber (46), vorzugsweise dem Mitnehmer (74), komplementär ist.

16. Regallager Anspruch 1, **dadurch gekennzeichnet, dass** das Schiebergehäuse (45) an seinem der Vorderkante (33) des Fachbodens (32) benachbarten Ende eine seitliche quer zur Längserstreckung des Schiebergehäuses (45) gelegene Öffnung (72) aufweist.

17. Regallager Anspruch 16, **dadurch gekennzeichnet, dass** der Schieber (46) mit einer Öffnung (79) versehen ist, die bei eingeschobenem Schieber (46) mit der Öffnung (72) in dem Schiebergehäuse (45) fluchtet.

18. Regallager Anspruch 1, **dadurch gekennzeichnet, dass** der Fortsatz (56) an der Unterseite (52) des Schiebergehäuses (45) in Gestalt einer Leiste nahezu über die gesamte Länge des Schiebergehäuses (45) durchgeht.

19. Regallager Anspruch 18, **dadurch gekennzeichnet, dass** die Leiste (56) an ihrem von der Vorderkante (33) des Fachbodens (32) abliegenden Ende mit seitlichen Fortsätzen (57) versehen ist, die sich lediglich über ein kurzes Stück der Leiste (56) in deren Längsrichtung erstrecken.

20. Regallager Anspruch 19, **dadurch gekennzeichnet, dass** die Fortsätze (57) derart gestaltet sind, dass das Schiebergehäuse (45) bei in der Aufnahmenut (35) sitzenden Fortsätzen (57) an der der Vorderkante (33) des Fachbodens (32) zugekehrten Seite vom Fachboden (32) ein Stück weit anhebbar ist.

21. Regallager Anspruch 1, **dadurch gekennzeichnet, dass** zwei Arten von Schiebergehäusen (45) vorgesehen sind, die sich lediglich dadurch unterscheiden, dass bei der einen Sorte von Schiebergehäusen (45) der Fortsatz (56) der einen Kante des Bodens (52) und bei der anderen Art von Schiebergehäusen (45) der anderen Kante des Bodens (52) benachbart ist, um je nach Verwendung der Art des Schiebergehäuses (45) die Speichergassenbreite zu variieren, wobei jedesmal dieselbe Aufnahmenut (35) verwendet wird.

22. Regallager Anspruch 15, **dadurch gekennzeichnet, dass** Mitnehmereinrichtung (81,82) an dem Schieber (46), die zum Ankuppeln des Schiebers (46) an die Antriebsmittel (87,88,89,91) vorgesehen ist, eine Öffnung (82) umfasst, die sich oberhalb des Schiebergehäuses (45) befindet.

23. Regallager Anspruch 22, **dadurch gekennzeichnet, dass** die Öffnung (82) von einer nach oben offenen Nut gebildet ist.

24. Regallager Anspruch 1, **dadurch gekennzeichnet, dass** die Sicherungseinrichtung (43,64) von einer ersten und einer dazu komplementären zweiten Sicherungsvorrichtung (43,64) gebildet ist, die lediglich in Richtung parallel zur Längserstreckung der Aufnahmenut (35) formschlüssiger zusammenwirken und in Richtung senkrecht dazu lösbar sind.

25. Regallager Anspruch 24, **dadurch gekennzeichnet, dass** die erste Sicherungsvorrichtung (43) von einem am Grund der Aufnahmenut (35) ausgebildeten Rippe oder Stege gebildet ist und die zweite Sicherungsvorrichtung (64) von einer in dem Fortsatz (56) des Schiebergehäuses (45) ausgebildeten Ausnehmung.

26. Regallager Anspruch 1, **dadurch gekennzeichnet, dass** der Fortsatz (56) im Bereich der Sicherungsvorrichtung (43,64) eine größere Höhe aufweist als in seiner übrigen Erstreckung.

27. Regallager Anspruch 26, **dadurch gekennzeichnet, dass** der Fortsatz (56) über eine Schrägfläche (62) in die Sicherungsvorrichtung (43,64) übergeht.

28. Regallager Anspruch 16, **dadurch gekennzeichnet, dass** die Antriebsmittel (87,88,89,91) einen Schwenkarm (89) umfassen, der um eine Achse schwenkbar ist, die parallel zu der Achse zu der Öffnung (72) in dem Schiebergehäuse (45) liegt.

29. Regallager Anspruch 28, **dadurch gekennzeichnet, dass** der Schwenkarm (89) in Richtung parallel zu der Längserstreckung des Schiebergehäuses (45) hin und her bewegbar ist.

30. Regallager Anspruch 28, **dadurch gekennzeichnet, dass** der Schwenkarm (89) einen in die Öffnung (72) des Schiebergehäuses passenden Zapfen (91) aufweist.

31. Regallager nach Anspruch 1, **dadurch gekennzeichnet, dass** die Antriebsmittel (87,88,89,91) für den Schieber (46) und die Antriebsmittel (87,88,89,91) für die Sicherungseinrichtung (43,64) miteinander kombiniert bzw. dieselben Antriebsmittel (87,88,89,91) sind.

32. Regallager nach Anspruch 1, **dadurch gekennzeichnet, dass** das Regalbediengerät (84) in Führungsmitteln geführt ist, die dazu eingerichtet sind, das Regalbediengerät (84) vor jedes Regalfach zu bringen.

33. Regallager nach Anspruch 1, **dadurch gekennzeichnet, dass** das Regalbediengerät (84) wenigstens eine Fördereinrichtung (86) aufweist, um den Gegenstand oder die Gegenstände in ein Regalfach zu transportieren.

34. Regallager nach Anspruch 33, **dadurch gekennzeichnet, dass** die Fördereinrichtung (86) ein Endlosförderband umfasst.

35. Regallager nach Anspruch 1, **dadurch gekennzeichnet, dass** das Regalbediengerät (84) eine Führungsnut (92) aufweist, die dazu eingerichtet ist den Schieber (46) und/oder das Schiebergehäuse (45) aufzunehmen.

## Claims

1. Storage shelving unit (1)
with at least one shelf compartment base (32), which has a plane supporting surface (34) for objects to be stored and which contains at least one straight receiving groove (35),
with at least one slider housing (45), which on its underside (52) has an extension (56) that can be inserted into the receiving groove and which contains a guide groove (54), with a releasable locking arrangement (43, 64), which is active between the slider housing (45) and the compartment base (32) and has two function positions, wherein in one function position it blocks a movement of the slider housing (45) in the longitudinal direction thereof on the compartment base (32) and does not block the movement in the other function position,
with a slider (46), which has a coupling rod (73) and an entrainment element (74) sitting on the coupling rod (73), wherein the coupling rod (73) is guided longitudinally displaceably in the guide groove (54) of the slider housing (45) and the entrainment element (74) is oriented transversely to the slider housing (45) and projects from the slider housing (45) to convey the object or objects down from the compartment base (32),
with a storage and retrieval unit (84), which is fitted to be moved in front of each of the shelf compartments,
with drive elements (87, 88, 89, 91) for the slider (46), which are arranged on the storage and retrieval unit (84) and which are fitted to be selectively detachably coupled to the slider (46) in order to set the slider (46) in motion at least in the direction of conveying objects out of the shelf compartment, and
with drive elements (87, 88, 89, 91) for releasing the locking arrangement (43, 64) and for moving the slider housing (45).

2. Storage shelving unit according to claim 1, **characterised in that** the storage shelving unit (1) has a plurality of shelf compartment bases (32).

3. Storage shelving unit according to claim 1, **characterised in that** the compartment base (32) is substantially plane.

4. Storage shelving unit according to claim 1, **characterised in that** the compartment base (32) is oriented horizontally.

5. Storage shelving unit according to claim 1, **characterised in that** the compartment base (32) is oriented horizontally in at least one axis, preferably in two axes.

6. Storage shelving unit according to claim 1, **characterised in that** the compartment base (32) consists of an extruded profile, preferably made of plastic.

7. Storage shelving unit according to claim 1, **characterised in that** a plurality of receiving grooves (35) arc arranged parallel and adjacent to one another in the compartment base (32)

8. Storage shelving unit according to claim 7, **characterised in that** the receiving grooves (35) are distributed equidistantly adjacent to one another along the longitudinal extent of the compartment base (32).

9. Storage shelving unit according to claim 1, **characterised in that** the compartment base (32) forms a rectangular supporting surface (34).

10. Storage shelving unit according to claim 1, **characterised in that** the long edge (33) of the compartment base (32) stands opposite the storage and retrieval unit (84).

11. Storage shelving unit according to claim 1, **characterised in that** the cross-section of the receiving groove (35) is composed of a groove chamber (36) and a groove slot (37), wherein the groove slot (37) opens upwards through the supporting surface (34) and has a width that is smaller than the transverse dimension of the groove chamber (36).

12. Storage shelving unit according to claim 11, **characterised in that** the groove chamber (36) has a rectangular or circular cross-section.

13. Storage shelving unit according to claim 1, **characterised in that** the guide groove (54) of the slider housing (45) is substantially free from undercuts.

14. Storage shelving unit according to claim 1, **characterised in that** the slider housing (45) is provided with a catch means (66, 69) for the slider (46).

15. Storage shelving unit according to claim 1, **characterised in that** the catch means (66, 69) comprises a leaf spring, on the underside of which is configured a catch member (69), which is complementary to a catch member (78) on the slider (46), preferably the entrainment means (74).

16. Storage shelving unit according to claim 1, **characterised in that** at its end adjacent to the front edge (33) of the compartment base (32) the slider housing (45) has a lateral opening (72) positioned transversely to the longitudinal extent of the slider housing (45).

17. Storage shelving unit according to claim 16, **characterised in that** the slider (46) is provided with an opening (79), which aligns with the opening (72) in the slider housing (45) when the slider (46) is inserted.

18. Storage shelving unit according to claim 1, **characterised in that** the extension (56) on the underside (52) of the slider housing (45) extends almost over the entire length of the slider housing (45) in the form of a ledge?.

19. Storage shelving unit according to claim 18, **characterised in that** on its end remote from the front edge (33) of the compartment base (32) the ledge (56) is provided with lateral extensions (57), which extend only over a short distance of the ledge (56) in the longitudinal direction thereof.

20. Storage shelving unit according to claim 19, **characterised in that** the extensions (57) are configured in such a manner that with extensions (57) sitting in the receiving groove (35) the slider housing (45) can be lifted a short distance from the compartment base (32) on side facing the front edge (33) of the compartment base (32).?

21. Storage shelving unit according to claim 1, **characterised in that** two types of slider housings (45) are provided, which differ merely **in that** with one sort of slider housing (45) the extension (56) is adjacent to one edge of the base (52) and with the other sort of slider housing (45) is adjacent to the other edge of the base (52) in order to vary the width of the storage aisles? depending on the type of slider housing (45) used, wherein the same receiving groove (35) is used each time.

22. Storage shelving unit according to claim 15, **characterised in that** on the slider (46) the entrainment device (81, 82), which is provided to couple the slider (46) to the drive elements (87, 88, 89, 91), comprises an opening (82), which is located above the slider housing (45).

23. Storage shelving unit according to claim 22, **characterised in that** the opening (82) is formed by an upwardly open groove.

24. Storage shelving unit according to claim 1, **characterised in that** the locking arrangement (43, 64) is formed by a first locking device and a second locking device (43, 64) complementary thereto, which interact in a more positive-locking manner only in a direction parallel to the longitudinal extent of the receiving groove (35) and are releasable in a direction perpendicular thereto.

25. Storage shelving unit according to claim 24, **characterised in that** the first locking device (43) is formed from a rib or web configured on the base of the receiving groove (35) and the second locking device (64) is formed from a recess configured in the extension (56) of the slider housing (45).

26. Storage shelving unit according to claim 1, **characterised in that** the extension (56) has a greater height in the region of the locking device (43, 64) than in the rest of its extent.

27. Storage shelving unit according to claim 26, **characterised in that** the extension (56) merges into the locking device (43, 64) via an inclined surface (62).

28. Storage shelving unit according to claim 16, **characterised in that** the drive elements (87,88,89,91) comprise a pivot arm (89), which can be pivoted around an axis lying parallel to the axis to the opening (72) in the slider housing (45).

29. Storage shelving unit according to claim 28, **characterised in that** the pivot arm (89) is movable back and forth in a direction parallel to the longitudinal extent of the slider housing (45).

30. Storage shelving unit according to claim 28, **characterised in that** the pivot arm (89) has a journal (91) fitting into the opening (72) of the slider housing.

31. Storage shelving unit according to claim 1, **characterised in that** the drive elements (87, 88, 89, 91) for the slider (46) and the drive elements (87, 88, 89, 91) for the locking arrangement (43, 64) are combined with one another or are the same drive elements (87, 88, 89, 91).

32. Storage shelving unit according to claim 1, **characterised in that** the storage and retrieval unit (84) is guided in guide elements, which are fitted to bring the storage and retrieval unit (84) in front of each of the shelf compartment.

33. Storage shelving unit according to claim 1, **characterised in that** the storage and retrieval unit (84) has at least one conveying means (86) to transport the object or objects into a shelf compartment.

34. Storage shelving unit according to claim 33, **characterised in that** the conveying means (86) comprises a continuous conveyor belt.

35. Storage shelving unit according to claim 1, **characterised in that** the storage and retrieval unit (84) has a guide groove (92), which is fitted to receive the slider (46) and/or the slider housing (45).

## Revendications

1. Magasin à rayonnages (1),
comprenant au moins une tablette (32) qui présente une surface de support (34) plane pour des objets à stocker et qui comporte au moins une rainure réceptrice (35)rectiligne,
comprenant au moins un boîtier à poussoir (45) qui présente, sur sa face inférieure (52), une saillie (56) pouvant être engagée dans la rainure réceptrice (35), et qui comporte une rainure de guidage (54)
comprenant un dispositif de verrouillage (43, 64) libérable qui agit entre le boîtier à poussoir (45) et la tablette (32) et qui présente deux positions de fonctionnement, sachant que dans une position de fonctionnement, il bloque le mouvement du boîtier à poussoir (45) dans le sens de sa longueur, sur la tablette (32), et dans l'autre position de fonctionnement, il ne bloque pas ce mouvement,
comprenant un poussoir (46) qui présente une tige d'accouplement (73) et un entraîneur (74) monté sur la tige d'accouplement (73), ladite tige (73) étant guidée dans la rainure de guidage (54) du boîtier à poussoir (45), avec possibilité de coulissement en longueur, et l'entraîneur (74) étant orienté perpendiculairement au boîtier à poussoir (45) pour décharger l'objet ou les objets de la tablette (32),
comprenant un appareil de desserte de rayonnage (84) qui est agencé pour être amené devant chaque compartiment de rayonnage,
comprenant des moyens d'entraînement (87, 88, 89, 91) pour le poussoir (46), qui sont disposés sur l'appareil de desserte de rayonnage (84) et qui sont agencés pour être accouplés au poussoir (46), au choix de façon amovible, afin de mettre le poussoir (46) en mouvement, au moins dans le sens d'une éjection d'objets du compartiment de rayonnage, et
comprenant des moyens d'entraînement (87, 88, 89, 91) pour libérer le dispositif de verrouillage (43, 64) et pour déplacer le boîtier à poussoir (45).

2. Magasin à rayonnages selon la revendication 1, **caractérisé en ce que** le magasin à rayonnages (1) présente une pluralité de tablettes (32).

3. Magasin à rayonnages selon la revendication 1, **caractérisé en ce que** la tablette (32) est sensiblement plane.

4. Magasin à rayonnages selon la revendication 1, **caractérisé en ce que** la tablette (32) est disposée horizontalement.

5. Magasin à rayonnages selon la revendication 1, **caractérisé en ce que** la tablette (32) est disposée horizontalement suivant au moins un axe, de préférence suivant deux axes.

6. Magasin à rayonnages selon la revendication 1, **caractérisé en ce que** la tablette (32) est constituée d'un profilé extrudé, de préférence en matière plastique.

7. Magasin à rayonnages selon la revendication 1, **caractérisé en ce que** la tablette (32) comporte une pluralité de rainures réceptrices (35), disposées parallèlement les unes à côté des autres.

8. Magasin à rayonnages selon la revendication 7, **caractérisé en ce que** les rainures réceptrices (35) sont réparties de manière équidistante les unes à côté des autres, dans le sens de la longueur de la tablette (32).

9. Magasin à rayonnages selon la revendication 1, **caractérisé en ce que** la tablette (32) forme une surface de support (34) rectangulaire.

10. Magasin à rayonnages selon la revendication 1, **caractérisé en ce que** le grand côté (33) de la tablette (32) fait face à l'appareil de desserte de rayonnage (84).

11. Magasin à rayonnages selon la revendication 1, **caractérisé en ce que** la section transversale de la rainure réceptrice (35) se compose d'une cavité de rainure (36) et d'une fente de rainure (37), la fente de rainure (37) s'ouvrant vers le haut, à travers la surface de support (34), et présentant une largeur qui est inférieure à la dimension transversale de la cavité de rainure (36).

12. Magasin à rayonnages selon la revendication 11, **caractérisé en ce que** la cavité de rainure (36) présente une section transversale rectangulaire ou circulaire.

13. Magasin à rayonnages selon la revendication 1, **caractérisé en ce que** la rainure de guidage (54) du boîtier à poussoir (45) est sensiblement exempte de contre-dépouilles.

14. Magasin à rayonnages selon la revendication 1, **caractérisé en ce que** le boîtier à poussoir (45) est doté d'un dispositif d'encliquetage (66, 69) pour le poussoir (46).

15. Magasin à rayonnages selon la revendication 1, **caractérisé en ce que** le dispositif d'encliquetage (66, 69) comprend une lame de ressort sur la face inférieure de laquelle est façonné un élément d'encliquetage (69) qui est complémentaire d'un élément d'encliquetage (78) prévu sur le poussoir (46), de préférence sur l'entraîneur (74).

16. Magasin à rayonnages selon la revendication 1, **caractérisé en ce que** le boîtier à poussoir (45) présente, à son extrémité contiguë au bord avant (33) de la tablette (32), une ouverture (72) latérale, disposée perpendiculairement à la longueur du boîtier à poussoir (45).

17. Magasin à rayonnages selon la revendication 16, **caractérisé en ce que** le poussoir (46) est pourvu d'une ouverture (79) qui, lorsque le poussoir (46) est rentré, est alignée avec l'ouverture (72) du boîtier à poussoir (45).

18. Magasin à rayonnages selon la revendication 1, **caractérisé en ce que** la saillie (56) sur la face inférieure (52) du boîtier à poussoir (45) a la forme d'une baguette et s'étend presque sur toute la longueur du boîtier à poussoir (45).

19. Magasin à rayonnages selon la revendication 18, **caractérisé en ce que** la baguette (56) comporte, à son extrémité éloignée du bord avant (33) de la tablette (32), des saillies (57) latérales qui s'étendent seulement sur une petite portion de la baguette (56), dans le sens de la longueur de celle-ci.

20. Magasin à rayonnages selon la revendication 19, **caractérisé en ce que** les saillies (57) sont conformées de manière telle que, lorsque les saillies (57) sont engagées dans la rainure réceptrice (35), le boîtier à poussoir (45) puisse être soulevé d'une certaine distance de la tablette (32), sur le côté tourné vers le bord avant (33) de la tablette (32).

21. Magasin à rayonnages selon la revendication 1, **caractérisé en ce qu'**il est prévu deux types de boîtiers à poussoir (45) qui se distinguent seulement par le fait que sur un type de boîtier (45), la saillie (56) est contiguë à un bord de la tablette (52), et sur l'autre type de boîtier (45), elle est contiguë à l'autre bord de la tablette (52), afin de faire varier la largeur de la ligne d'entreposage, selon l'utilisation du type de boîtier à poussoir (45), en utilisant chaque fois la même rainure réceptrice (35).

22. Magasin à rayonnages selon la revendication 15, **caractérisé en ce que** le dispositif d'entraînement (81, 82), qui est prévue sur le poussoir (46) et destinée à l'accouplement du poussoir (46) aux moyens d'entraînement (87, 88, 89, 91), comprend une ouverture (82) qui se situe au-dessus du boîtier à poussoir (45).

23. Magasin à rayonnages selon la revendication 22, **caractérisé en ce que** l'ouverture (82) est formée d'une rainure ouverte vers le haut.

24. Magasin à rayonnages selon la revendication 1, **caractérisé en ce que** le dispositif de verrouillage (45, 64) est formé d'un premier et d'un deuxième dispositif de verrouillage (43, 64), complémentaire du premier, qui coopèrent mécaniquement, uniquement dans la direction parallèle à la longueur de la rainure réceptrice (35), et peuvent être libérés dans la direction perpendiculaire à celle-ci.

25. Magasin à rayonnages selon la revendication 24, **caractérisé en ce que** le premier dispositif de verrouillage (43) est formé d'une nervure ou d'une aile façonnée sur le fond de la rainure réceptrice (35), et le deuxième dispositif de verrouillage (64) est formé d'un évidement réalisé dans la saillie (56) du boîtier à poussoir (45).

26. Magasin à rayonnages selon la revendication 1, **caractérisé en ce que** dans la région du dispositif de verrouillage (43, 64), la saillie (56) présente une hauteur qui est supérieure à celle de ses autres portions.

27. Magasin à rayonnages selon la revendication 26, **caractérisé en ce que** la saillie (56) se raccorde par une surface oblique (62) au dispositif de verrouillage (43, 64).

28. Magasin à rayonnages selon la revendication 16, **caractérisé en ce que** les moyens d'entraînement (87, 88, 89, 91) comprennent un bras pivotant (89) qui peut pivoter autour d'un axe qui est parallèle à l'axe de l'ouverture (72) dans le boîtier à poussoir (45).

29. Magasin à rayonnages selon la revendication 28, **caractérisé en ce que** le bras pivotant (89) peut être déplacé selon un mouvement de va-et-vient, dans la direction parallèle à la longueur du boîtier à poussoir (45).

30. Magasin à rayonnages selon la revendication 28, **caractérisé en ce que** le bras pivotant (89) présente un doigt (91) s'ajustant dans l'ouverture (72) du boîtier à poussoir.

31. Magasin à rayonnages selon la revendication 1, **caractérisé en ce que** les moyens d'entraînement (87, 88, 89, 91) pour le poussoir (46) et les moyens d'entraînement (87, 88, 89, 91) pour le dispositif de verrouillage (43, 64) sont combinés entre eux ou sont des moyens d'entraînement (87, 88, 89, 91) identiques.

32. Magasin à rayonnages selon la revendication 1, **caractérisé en ce que** l'appareil de desserte de rayonnage (84) est guidé dans des moyens de guidage qui sont agencés pour amener l'appareil de desserte de rayonnage (84) devant chaque tablette de rayonnage.

33. Magasin à rayonnages selon la revendication 1, **caractérisé en ce que** l'appareil de desserte de rayonnage (84) présente au moins un dispositif de transport (86) pour transporter l'objet ou les objets dans un compartiment de rayonnage.

34. Magasin à rayonnages selon la revendication 33, **caractérisé en ce que** le dispositif de transport (86) est une bande transporteuse sans fin.

35. Magasin à rayonnages selon la revendication 1, **caractérisé en ce que** l'appareil de desserte de rayonnage (84) présente une rainure de guidage (92) qui est conçue pour recevoir le poussoir (46) et/ou le boîtier à poussoir (45).
